# EUROPEAN PATENT APPLICATION

(11) **EP 4 793 728 A1**
(43) Date of publication of application: **19.08.2026**
(21) Application number: 25157894.4
(22) Date of filing: 14.02.2025
(51) Int. Cl.: G05B 23/02, G06Q 10/20, G07C 5/00, G07C 5/08

(54) **METHOD AND SYSTEM FOR PROCESSING QUALITY INDICATING DATA**

(71) Applicant: Volvo Truck Corporation, 405 08 Göteborg (SE)
(72) Inventor: Nilsson, Henrik, 436 38 Göteborg (SE)
(74) Representative: Valea AB

(57) **Abstract**

Method for generating, storing and processing quality indicating data for a product. The method comprises collecting operating quality indicating values from at least one component comprised in the product; generating a quality indicating data for each of the operating quality indicating values by normalizing each of the operating quality indicating values to an integer, wherein the quality indicating data indicating how close an operating quality indicating value is to a required quality threshold or how much the operating quality indicating value is above the required quality threshold; and storing the quality indicating data together with other operational data of the component collected for a session representing how the product is operating during a period.

## Description

### TECHNICAL FIELD

The disclosure relates generally to computer systems. In particular aspects, the disclosure relates to method and system for processing quality indicating data of products. The disclosure can be applied to any products such as mechatronic apparatus, vehicles, construction equipment, etc. Although the disclosure may be described with respect to a particular vehicle, the disclosure is not restricted to any particular vehicle.

### BACKGROUND

Quality feedback is essential for a product because it serves as a foundation for improvement, innovation, and customer satisfaction. Quality feedback may reveal function failures, bugs, usability issues, or design flaws. It can give actionable insights to enhance the robustness of products, reduce risks by addressing issues early to avoid costly redesigns, refunds, or reputational damage. A product shaped by quality feedback often results in a better fit for the target market, increasing customer retention and attracting more users. However, there are several challenges associated with quality feedback regarding gathering and interpreting quality indication data, as well as acting on the quality indication data.

For example, when collecting quality indication data on vehicles, there are specific issues and challenges unique to the automotive industry as vehicles are complex mechatronic products. Today smart vehicles generate a large amount of data every second. These data can be used to derive useful insights pertaining to each component and every function's robust behavior in vehicles and can be used for evidence-based decisions on how to improve. However, retrieving data from customer vehicles comes with a cost for the mobile network data transfer, the data needs to be compressed and scaled efficiently to allow readout from thousands of customer vehicles on a regular basis. Moreover, understanding a large quantity of quality indicators for many different technical areas is also a big challenge. Furthermore, the existing quality indicators may lack detail, e.g. just a value or a "fault" or "not working" indicator, making it difficult to understand the actual issue, e.g. what's wrong or whether or not there is a major problem. How a failure occurrence is represented and shown in a standard way is much desired so that everybody can interpret and understand the quality indicators in the same way and overall awareness of function robustness is improved throughout the product organization.

### SUMMARY

According to a first aspect of the disclosure, a method for generating and storing quality indicating data for a product is provided. The method comprises collecting operating quality indicating values from at least one component comprised in the product; generating a quality indicating data for each of the operating quality indicating values by normalizing each of the operating quality indicating values to an integer, wherein the quality indicating data indicating how close an operating quality indicating value is to a required quality threshold or how much the operating quality indicating value is above the required quality threshold. The method further comprises storing the quality indicating data together with other operational data of the component collected for a session representing how the product is operating during a period.

The first aspect of the disclosure may seek an improved method to collect, normalize, standardize and log data for evaluation of functional robustness of a component comprised in the product, e.g. hardware and software components of a vehicle. A technical benefit may include generating quality indicating data with a format that is easy to read, understand and consume, providing potential to calculate standard deviation, histograms and assess potential risks of poor robustness by processing data further off-board. The quality indicating data contains not only the value, but also information about how close an operating quality indicating value is to a required quality threshold or how much the operating quality indicating value is above the required quality threshold at the point of evaluation, thus providing an earlier indication of risk of failures by knowing the degree of unrobustness, and providing a way to scale-up data to great numbers by using aggregation to a binary expression intended for quick filtering of what quality indicators that could be of more significant interest during analysis.

Optionally in some examples, including in at least one preferred example, normalizing each of the operating quality indicating values may comprise comparing each of the operating quality indicating values with a physical threshold value, wherein the physical threshold value represents the required quality threshold which is configurable or changeable depends on different applications. A technical benefit may include providing quality indicating data with a format that is standardized for easy to read, understand and consume, even without deep technical knowledge about the functional area of the product by configuring or changing the physical threshold value represents the required quality threshold based on different applications and functions.

Optionally in some examples, including in at least one preferred example, each of the operating quality indicating values may be normalized to an integer represented by 1 Byte with distinct integer values of 0-255, and wherein integer value 128 represents the required quality threshold. A technical benefit may include providing a format that is easy to read, understand and consume, even without deep technical knowledge about the functional area of the product, providing potential to calculate standard deviation, histograms and assess potential risks of poor robustness by processing data further off-board, providing a way to scale-up data to great numbers, using aggregation to a binary expression intended for quick filtering of what quality indicators that could be of more significant interest during analysis.

Optionally in some examples, including in at least one preferred example, the integer values of 0-255 may indicate functional robustness of the at least one component, and the quality indicating data in the range of 0-127 may indicate the functional robustness of the at least one component is normal or robust, as well as a degree of robustness, and the quality indicating data in the range of 128-254 may indicate the functional robustness of the at least one component is unnormal or unrobust, as well as a degree of unrobustness, and the value 255 indicates "not yet evaluated". A technical benefit may include providing a format that is easy to read, understand and consume, even without deep technical knowledge about the functional area of the product, providing potential to calculate standard deviation, histograms and assess potential risks of poor robustness by processing data further off-board, providing early indication of risk of failures by knowing the degree of unrobustness.

Optionally in some examples, including in at least one preferred example, each quality indicating data may be identified by an index in a Data Identifier (DID) defined as per functional area of the product. A technical benefit may include providing easy reading out and identifying the quality indicating data for different functional areas of the product.

Optionally in some examples, including in at least one preferred example, the method may further comprise grouping together a collection of quality indicating data at an end of the session using a session identifier. A technical benefit may include providing easy reading out and identifying the quality indicating data collected for different operating sessions of the product, providing data that is not "contaminated" by previous events.

Optionally in some examples, including in at least one preferred example, the method may further comprise sending the quality indicating data or a group of quality indicating data to a central system for further processing. A technical benefit may include providing meaningful data from a large number of customer products on a level detailed enough to evaluate robustness of each single contributing component, both software and hardware, of any larger system, saving on-board memory of the product by reading-out data per session and sending the data to the central system so that there is no need to store data in the on-board memory.

Optionally in some examples, including in at least one preferred example, the method may further comprise controlling or diagnosing the operation of the product based on the quality indicating data. A technical benefit may include improving the quality and function robustness of the product, reducing recalling rate of products due to quality issues, increasing the quality reputation of a product brand.

Optionally in some examples, including in at least one preferred example, the operating quality indicating values may be any one or a combination of sensor values, estimated values, software model values, control signal values of the product, and the operating quality indicating values are measured, or tested, or evaluated for checking or indicating functional robustness of any hardware components or software components at any level from a system to a smallest hardware/software component level comprised in the product. A technical benefit may include revealing function failures, bugs, usability issues, or design flaws at any desired level, providing actionable insights to enhance the robustness of products, reducing risks by addressing issues earlier at any desired level to avoid costly redesigns, refunds, or reputational damage, increasing customer retention and attracting more users by providing quality feedback at any desired level to better fit the target market.

According to a second aspect of the disclosure, a computer system for implementing the method described above for generating and storing quality indicating data for a product is provided. The computer system comprises a processing circuitry configured to collect operating quality indicating values from at least one component comprised in the product; generate a quality indicating data for each of the operating quality indicating values by normalizing each of the operating quality indicating values to an integer, wherein the quality indicating data indicating how close an operating quality indicating value is to a required quality threshold or how much the operating quality indicating value is above the required quality threshold. The processing circuitry is further configured to store the quality indicating data together with other operational data of the component collected for a session representing how the product is operating during a period. A technical benefit may include generating quality indicating data with a format that is easy to read, understand and consume, providing potential to calculate standard deviation, histograms and assess potential risks of poor robustness by processing data further off-board. The quality indicating data contains not only the value, but also information about how close an operating quality indicating value is to a required quality threshold or how much the operating quality indicating value is above the required quality threshold at the point of evaluation, thus providing an earlier indication of risk of failures by knowing the degree of unrobustness, and providing a way to scale-up data to great numbers by using aggregation to a binary expression intended for quick filtering of what quality indicators that could be of more significant interest during analysis.

According to a third aspect of the disclosure, a method performed by a central system for processing data from a number of products is provided. The method comprises receiving a number of groups of quality indicating data from the number of products. Each group of quality indicating data comprises a collection of quality indicating data for a session representing how a product is operating during a period. Each quality indicating data is generated from an operating quality indicating value of a component comprised in the product by normalizing the operating quality indicating value to an integer indicating how close the operating quality indicating value is to a required quality threshold or how much the operating quality indicating value is above the required quality threshold. The method further comprises processing the groups of quality indicating data; and assessing functional robustness of the component comprised in the product based on the groups of quality indicating data.

The third aspect of the disclosure may seek moving as much calculation as possible to offboard and offer better flexibility in e.g. data processing, selection, aggregation and consumption, as well as assessing functional robustness based on data from a large number of customer products. A technical benefit may include collecting meaningful data from a large number of customer products on a level detailed enough to evaluate robustness of each single contributing component, both software and hardware, of any larger system thanks to the quality indicating data with a format that is easy to read, understand and consume, providing potential to calculate standard deviation, histograms and assess potential risks of poor robustness by processing the collected data from multiple products, no need of storing data in the memory of the products since data collected over time, and on multiple products can be shown in its distribution off-board. The quality indicating data contains not only the value, but also information about how close an operating quality indicating value is to a required quality threshold or how much the operating quality indicating value is above the required quality threshold at the point of evaluation, thus providing an earlier indication of risk of failures by knowing the degree of unrobustness, and providing a way to scale-up data to great numbers by using aggregation to a binary expression intended for quick filtering of what quality indicators that could be of more significant interest during analysis, reducing data amount that needs to be read out from products, easy scaling to great amount of quality indicators on larger amount of products.

Optionally in some examples, including in at least one preferred example, processing the groups of quality indicating data may comprise calculating at least one of a standard deviation of the groups of quality indicating data, an average of the groups of quality indicating data, and a histogram of the groups of quality indicating data. A technical benefit may include providing as much calculation as possible, e.g. average, standard deviation etc. off-board, reducing data processing on-board e.g. inside an embedded software in an ECU of the product, providing basis for further analysis such as assessing if a functional area is normal, robust or fail etc.

Optionally in some examples, including in at least one preferred example, assessing the functional robustness of the component comprised in the product may comprise assessing the functional robustness of the component comprised in the product to at least one of normal, no fault, small fault, big fault, and a fault value based on one or more function thresholds. A technical benefit may include providing an easy format for reading, understanding, analyzing and consuming the quality indicating data.

Optionally in some examples, including in at least one preferred example, the one or more function thresholds may comprise a control function threshold, and/or a diagnostic function threshold. A technical benefit may include providing different thresholds for diagnostic decisions and control decisions for nominal control range use cases such that for some events where the control logic can take some action under a condition of interest, that matters to the robustness of a mechatronic system being controlled. For example, some events are happening that are not judged as any component or system fault but still is an event distinguishing from "expected nominal operation" or "tolerated operation" ranges.

Optionally in some examples, including in at least one preferred example, the number of products may be selected based on at least one of Electronic Control Unit (ECU) version, software version, market, and manufacturing date of the products. A technical benefit may include providing and comparing the quality indicating data and functional robustness for a fleet product range for consistency and compatibility across different use cases.

Optionally in some examples, including in at least one preferred example, the method may further comprise sending the assessed functional robustness of the component to one or more data consumers for improving the operating quality of the product.

According to a fourth aspect of the disclosure, a central system for processing data from a number of products is provided. The central system is configured to receive a number of groups of quality indicating data from the number of products. Each group of quality indicating data comprises a collection of quality indicating data for a session representing how a product is operating during a period. Each quality indicating data is generated from an operating quality indicating value of a component comprised in the product by normalizing the operating quality indicating value to an integer indicating how close the operating quality indicating value is to a required quality threshold or how much the operating quality indicating value is above the required quality threshold. The central system is further configured to process the groups of quality indicating data and assess functional robustness of the component comprised in the product based on the groups of quality indicating data.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units or system, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is a schematic diagram showing quality indicating data normalized to 1 Byte integer according to an example.
**FIG. 2** is a schematic diagram showing an exemplary structure of quality indicating data according to an example.
**FIG. 3** is a schematic diagram showing exemplary processing results of groups of quality indicating data according to an example.
**FIG. 4** is a flow chart of an exemplary method for generating and storing quality indicating data;
**FIG. 5** is a flow chart of an exemplary method for processing data from a number of products;
**FIG. 6** is a schematic diagram of an exemplary computer system for implementing examples disclosed herein, according to an example; and
**FIG. 7** is a schematic block diagram showing an exemplary network comprising a central system and one or more products.

### DETAILED DESCRIPTION

The detailed description set forth below provides information and examples of the disclosed technology with sufficient detail to enable those skilled in the art to practice the disclosure.

To solve the problem of obtaining meaningful data from a large number of customer products, on a level detailed enough to evaluate robustness of each contributing component both in software and hardware of any larger system, a method for generating and storing quality indicating data for a product is provided. The proposed method is an event-based method to collect, normalize, standardize and log data for evaluation of functional robustness of any hardware components or software components comprised in the product at any level from a larger system level to the smallest software and hardware component level, e.g. an on-board system, an embedded system, a control system, a charging control software etc. in a vehicle.

The method is applicable to any type of function taking an action based on a comparison of one signal value to a threshold or limit, e.g. a constant, a parameter or another signal value. The method is applicable for control functions and diagnostic functions, including non-fault and non-critical events, and can measure the robustness on control functions. For example, there may be more than 50 software components in a hybrid power control unit (HPCU) for charging function in an electrical vehicle. The charging control software is one of many reasons for charging failure and reduced charging success rate. Does each software component for charging operate correctly? There are also lots of limits, e.g. temperature limits, current limits, voltage limits, time-out timers, counters, sensor accuracy etc. to be considered when making a decision or taking an action. For example, in order to protect components, charging current may be derated based on comparing the measured temperature with a temperature threshold. For customer vehicles, a common way to track quality is based on monitoring the occurrence of Diagnostic Trouble Code (DTCs). However, this can only regard the DTC and DTC snapshot data for deep diving and cannot acquire corresponding robustness data of control functions from the customer vehicles.

The proposed method provides a way of working with operating quality indicating values measured, or tested, or estimated or simulated for checking or indicating functional robustness of any hardware and software components at any level from a whole system to the smallest hardware or software component comprised in the product. The proposed method can provide early indications of problems, and track improvements over time for a product.

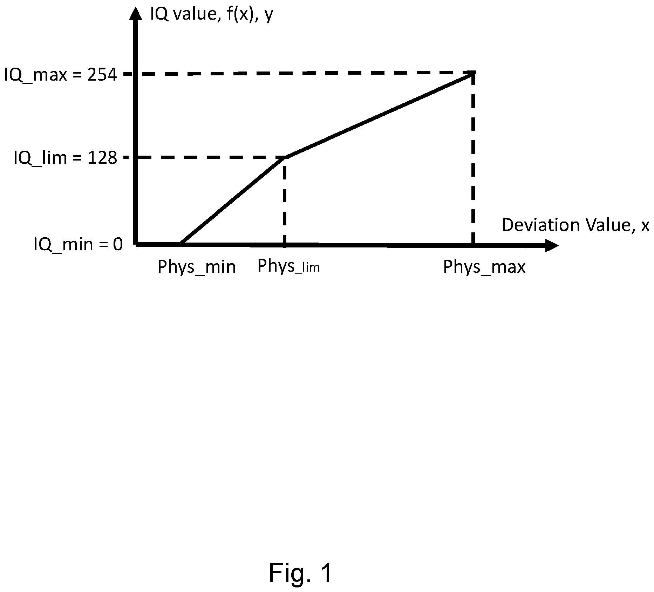

The operating quality indicating values may be any one or a combination of sensor values, estimated values, software model values, control signal values of the product. The operating quality indicating values in this method is normalized in a way such that one single Byte of data contains not only a value, but also information about "how close to a limit" or "how far above a limit" the value was at the point of evaluation. For example, quality indicating data is generated based on the operating quality indicating values using 1 Byte, e.g. 8 bits with the distinct values of 0-255. Value 128 may be reserved for the breakpoint, i.e. the required quality limit or threshold. If the quality indicating data is in range 0-127 indicating the behaving is robustly or nominal. If the quality indicating data is in range 128-254, indicating less robust behavior. 255 means "not yet evaluated". This is illustrated in **Fig.1****,** where IQ represents Indicator of Quality, Phys_min, Phys_lim, Phys_max represent the minimum, threshold and maximum of operating quality indicating values respectively which are physical values measured, or tested, or estimated or simulated for indicating operating quality of a functional area of the product.

The operating quality indicating values may be normalized by comparing each of the operating quality indicating values with a physical threshold value, i.e. Phys_lim. The physical threshold value represents the required quality threshold which may be configurable or changeable depending on different applications and functional areas. In this way, a large quantity collected data of operating quality indicating values for many different technical and functional areas can be normalized and conform to the concept of Indicator of Quality, with a common scaling, definition, and representation. The normalization in this context enables the standardization of how a function failure occurrence may be represented or shown so that everybody speaks the same language regrading quality indicating.

The normalized quality indicating data may be stored together with other operational data of the component collected for a session representing how the product is operating during a period, e.g. a charging session, a type A communication session, a type B communication session, a driving session etc. A collection of quality indicating data may be grouped together at the end of the session period using a session identifier.

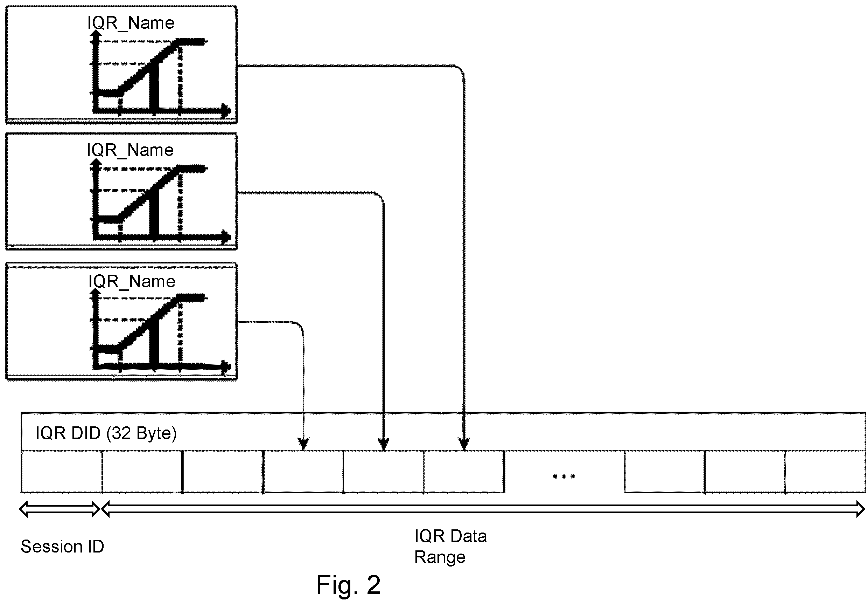

The normalized quality indicating data may be accessible via a data read-out protocol such as Unified Diagnostic Services (UDS) protocol by requesting a Data Identifier (DID). Each normalized quality indicating data is identified by its index in the DID. This helps minimizing the amount of data that needs to be read out, because no additional identifiers are needed. A DID may be of any size reasonable for stable read-out from e.g. an Electronic Control Unit (ECU) comprised in the product. DID may be defined as per functional area of the product using e.g. 32 Byte. **Fig.2** shows an exemplary data structure comprising a range of quality indicating data for different functional areas for a session identified with a session ID, where IQR represents Indicator of Quality Ranking.

The group of normalized quality indicating data may be readout at end of relevant sessions and uploaded to a central or cloud system for further processing. This allows the method to be used without the need of storing data in e.g. an on-board Non-volatile memory (NVM) of the product for each session. By data readout before the ECU power off and/or at the end of each session e.g. a charging session, a driving session, one can reduce NVM usage, avoid any on-board data processing, e.g. calculating histograms, handling any other multi-byte strategies etc. In many or most cases one can reduce readout data to **1 byte** per event. Histogram or quality ranking may be instead created per vehicle off-board by the central or cloud system. Statistics on the group of normalized quality indicating data may be generated off-board by the central or cloud system for selected products in the fleet.

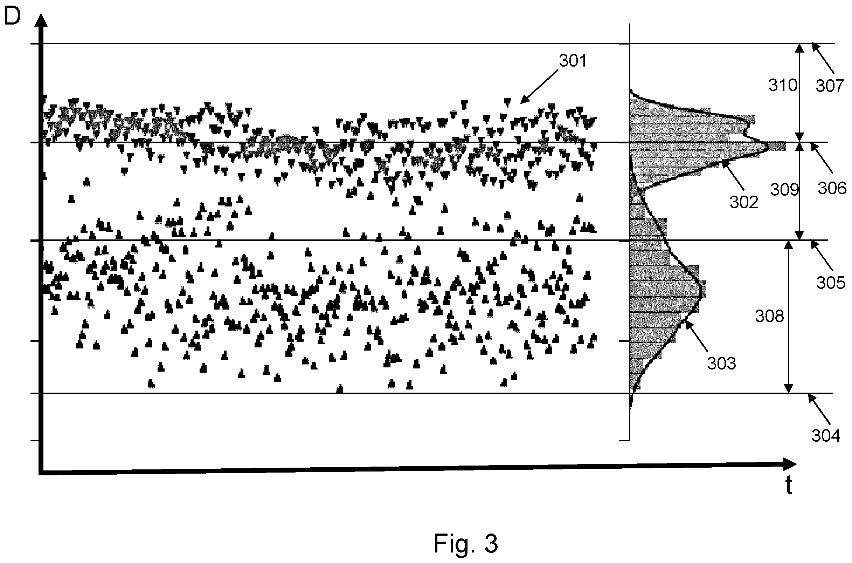

The quality indicating data collected over time, and on multiple products may be processed by the central system or cloud system off-board to show its distribution. The quality indicating data from multiple products may be uploaded to the central or cloud system via telematics. Several or different quality thresholds may be used for assessing the functional robustness of any function area. **Fig.3** shows an example where scatter plots indicated by reference number **301,** and histogram plots indicated by reference numbers **302, 303,** of standard deviation **D** versus events over time **t** for groups of quality indicating data are shown. There are several quality limits or thresholds shown in Fig.3, indicated by lines with reference numbers. Line **304** indicates the minimum deviation value, line **305** indicates a threshold to action e.g. timer or temperature limit etc. line **306** indicates a fault limit, line **307** indicates the maximum deviation value. Some limits are used for control function, e.g. the threshold to action, and some limits are used for diagnostic function, e.g. the fault limit. The range between the minimum deviation value and the threshold to action indicated by reference number **308** is the nominal or expected range. If the standard deviation of the quality indicating data from customer productors is in this range, it is the ultimate proof of the robustness for the productors. The range between the threshold to action and the fault limit indicated by reference number **309** is the range where operating events deviate from nominal but no fault. The range between the fault limit and the maximum deviation value indicated by reference number **310** indicates the fault size, i.e. how many fault events.

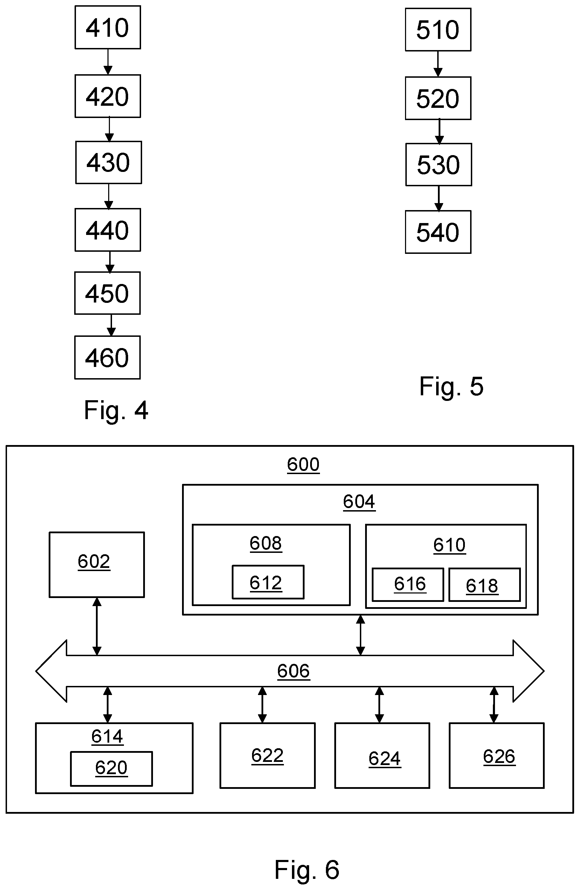

An example method for generating and storing quality indicating data for a product will be described with reference to **Fig. 4****.** The method comprises one or more of the following actions which may be performed in any suitable order. The method may be performed by a processing circuitry of a computer system comprised in the product.

### Action 410

Collecting operating quality indicating values from at least one component comprised in the product. The operating quality indicating values may be any one or a combination of sensor values, simulated values, estimated values, software model values, controlling signal values etc. of the product. The operating quality indicating values may be measured, or tested, or simulated, or evaluated for checking or indicating functional robustness of any hardware components or software components at any level from a system to the smallest software or hardware component level comprised in the product.

### Action 420

Generating a quality indicating data for each of the operating quality indicating values by normalizing each of the operating quality indicating values to an integer. The quality indicating data indicating how close an operating quality indicating value is to a required quality threshold or how much the operating quality indicating value is above the required quality threshold.

Normalizing each of the operating quality indicating values may comprise comparing each of the operating quality indicating values with a physical threshold value representing the required quality threshold which is configurable or changeable depends on different applications and functions.

Each of the operating quality indicating values may be normalized to an integer represented by 1 Byte with distinct integer values of 0-255, and wherein integer value 128 represents the required quality threshold.

The integer values of 0-255 may indicate functional robustness of the at least one component. The quality indicating data in the range of 0-127 indicates the functional robustness of the at least one component is normal or robust, as well as a degree of robustness, and the quality indicating data in the range of 128-254 indicates the functional robustness of the at least one component is unnormal or unrobust, as well as a degree of unrobustness, and the value 255 indicates "not yet evaluated".

The quality indicating data is accessible via e.g. a data read-out protocol such as UDS (Unified Diagnostic Services) protocol by requesting a DID (Data Identifier). Each quality indicating data may be identified by an index in a DID. The DID may be defined as per functional area of the product.

### Action 430

Storing the quality indicating data together with other operational data of the component collected for a session representing how the product is operating during a period. For example, when the product is a vehicle, a session may be "driving uphill", "driving downhill", "driving steady", "preparation for take-off", "charging" session etc.

At the end of such a session a collection of quality indicating data may be read out from the product and grouped together using a Session ID for evaluating the performance of this session on-board or off-board. Therefore, the method may further comprise the following actions.

### Action 440

Grouping together a collection of quality indicating data at an end of a session using a session identifier (ID).

Data collected over time, and on multiple products can be processed and shown in its distribution off-board by a central or cloud system. Therefore the method may further comprise the following actions.

### Action 450

Sending the quality indicating data or a group of quality indicating data to a central system for further processing. For example, calculating a standard deviation of the groups of quality indicating data, calculating an average of the groups of quality indicating data, or calculating a histogram of the groups of quality indicating data, assessing functional robustness of the component comprised in the product etc. The quality indicating data may be uploaded to the central system via telematics.

The quality indicating data may be used to control or diagnose the operation of the product. Therefore, the method may further comprise the following actions.

### Action 460

Controlling or diagnosing the operation of the product based on the quality indicating data for e.g. improving the product quality.

A method performed by a central system for processing data from a number of products will be described with reference to **Fig. 5****.** The method comprises one or more of the following actions which may be performed in any suitable order. The method may be performed by a processing circuitry of a computer system comprised in the central system.

### Action 510

The central system receives a number of groups of quality indicating data from a number of products. Each group of quality indicating data comprises a collection of quality indicating data for a session representing how a product is operating during a period. Each quality indicating data is generated from an operating quality indicating value of a component comprised in the product by normalizing the operating quality indicating value to an integer indicating how close the operating quality indicating value is to a required quality threshold or how much the operating quality indicating value is above the required quality threshold.

As retrieving data from customer products comes with a cost for the mobile network data transfer, the groups of quality indicating data which have been normalized, compressed and scaled efficiently allow readout from thousands of customer products on a regular basis.

To provide and compare the quality indicating data and functional robustness of a fleet product range, the number of products may be selected based on ECU version, software version, market, and manufacturing date etc. of the products for consistency and compatibility across different use cases.

### Action 520

The central system processes the groups of quality indicating data. For example, calculating a standard deviation of the groups of quality indicating data, an average of the groups of quality indicating data, a histogram of the groups of quality indicating data etc. For example, the central system may process the groups of quality indicating data and generate a diagram as shown in Fig.3.

### Action 530

The central system assesses the functional robustness of the component comprised in the product based on the groups of quality indicating data. For example, the central system may assess the functional robustness of the component comprised in the product to normal, no fault, small fault, big fault, and a fault value based on one or more function thresholds. The one or more function thresholds may be a control function threshold, a diagnostic function threshold etc. For example, as shown in Fig.3, if most of the standard deviations of the quality indicating data from the customer productors for a function area are in the normal range indicated by reference number 308, this function area of the productors has been proved or shown to be robust.

### Action 540

For providing insight into the operating quality of the product and improvement, the central system may send the assessed functional robustness of the component to one or more data consumers, e.g. the function developers of the product. In this way, a method to get the most crucial information about each and every function's robustness behavior of a product is provided and a continuous quality feedback loop for data driven development may be established. The quality indicating data generated and collected thus may be used for evidence-based decisions on how to improve the operating quality of the product by the function developers.

To summarize, a single integer is used to describe operating quality of a function area by normalizing an operating quality indicating value to a quality indicating data using 1 Byte with distinguished values 0-255. For example, if the quality indicating data is in the range 0-127, it indicates behaving robustly or nominally. If the quality indicating data is in the range 128-254, it indicates less robust behavior. Compared to the common logging principle of reading out a value, scaled/compressed or not, the quality indicating data in this method is normalized in a way such that one single Byte of data contains not only the value, but also information about "how close to a limit" or "how far above a limit" of an operating quality indicating value at the point of evaluation. That is the quality indicating data also indicates the robustness or unrobustness degree of a function area.

The method provides preprocessing, compression and normalization of data that indicates functional robustness on any software/hardware level from the whole system to the smallest software/hardware component level, in any case where an evaluated value is compared to a threshold value.

The normalization in the method reduces data amount that needs to be read out from products, makes it easy to scale to great amount of quality indicators on larger amount of products.

Calculation of any average and standard deviation is not done on-board, e.g. inside embedded software in an ECU, but off-board by a central system or cloud-based solution. Any processing calculations can be done based on product selection off- board

By read-out the quality indicating data per session there is no need to store data on-board memory and data is not "contaminated" by previous events.

The normalization in the method provides potential to calculate standard deviation, histograms and assess potential risks of poor robustness by processing data further off-board.

The normalization in the method also provides a way to scale-up read data to great numbers, using aggregation to a binary expression intended for quick filtering of what indicators that could be of more significant interest during analysis.

For any type of off-board processing or consumption, the data consumer can select part of product fleet range with selection of ECU, software version, market, manufacturing date etc. of the products.

The normalization in the method provides a format that is easy to read, understand and consume, even without deep technical knowledge about the functional area.

The normalization in the method provides easy understanding of a large quantity of quality indicators in many different technical areas for e.g. function developers, product management and market representatives, stakeholders etc. The generated quality indicating data conforms to the concept of Indicator of Quality with a common scaling, definition, and representation so that how failure occurrence can be represented or shown in a standardized way with the purpose of getting everybody to speak the same language.

The method introduces a way of working with the collected data such that overall awareness of function robustness can be improved throughout the product organization.

The method can make the function developer of the product responsible for logged data, analysis, regular basis presentation of quality situation, and suggesting improvement so that a closed loop of "Quality Feedback" can be realized.

The method can get an early indication expressed as the risk of failures for warranted parts that eventually may trigger a recall of products or harm the quality reputation of product corporation brands. Gaining knowledge as early as possible of system's robustness or problems would increase chances to take countermeasures before any such severe issue occurs and track improvements over time.

**FIG. 6** is a schematic diagram of a computer system **600** for implementing examples disclosed herein. The computer system 600 comprises a processing circuitry **602** configured to generate and store quality indicating data for a product. The computer system 600 may be an on-board system comprised in the product, such as an ECU, an embedded system etc.

The processing circuitry 602 is configured to perform any one of Actions 410-450 described above.

For example, the processing circuitry 602 is configured to collect operating quality indicating values from at least one component comprised in the product.

The processing circuitry 602 is configured to generate a quality indicating data for each of the operating quality indicating values by normalizing each of the operating quality indicating values to an integer. The quality indicating data indicating how close an operating quality indicating value is to a required quality threshold or how much the operating quality indicating value is above the required quality threshold.

The processing circuitry 602 is configured to store the quality indicating data together with other operational data of the component collected for a session representing how the product is operating during a period.

The computer system **600** is adapted to execute instructions from a computer-readable medium to perform these and/or any of the functions or processing described herein. The computer system **600** may be connected (e.g., networked) to other machines in a LAN (Local Area Network), LIN (Local Interconnect Network), automotive communication protocol, an intranet, an extranet, or the Internet. While only a single device is illustrated, the computer system **600** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **600** may comprise at least one computing device or electronic device capable of including firmware, hardware, and/or executing software instructions to implement the functionality described herein. The computer system **600** may include processing circuitry **602** (e.g., processing circuitry including one or more processor devices or control units), a memory **604,** and a system bus **606.** The computer system **600** may include at least one computing device having the processing circuitry **602.** The system bus **606** provides an interface for system components including, but not limited to, the memory **604** and the processing circuitry **602.** The processing circuitry **602** may include any number of hardware components for conducting data or signal processing or for executing computer code stored in memory **604.** The processing circuitry **602** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **602** may further include computer executable code that controls operation of the programmable device.

The system bus **606** may be any of several types of bus structures that may further interconnect to a memory bus (with or without a memory controller), a peripheral bus, and/or a local bus using any of a variety of bus architectures. The memory **604** may be one or more devices for storing data and/or computer code for completing or facilitating methods described herein. The memory **604** may include database components, object code components, script components, or other types of information structure for supporting the various activities herein. Any distributed or local memory device may be utilized with the systems and methods of this description. The memory **604** may be communicably connected to the processing circuitry **602** (e.g., via a circuit or any other wired, wireless, or network connection) and may include computer code for executing one or more processes described herein. The memory **604** may include non-volatile memory **606** (e.g., read-only memory (ROM), erasable programmable read-only memory (EPROM), electrically erasable programmable read-only memory (EEPROM), etc.), and volatile memory **610** (e.g., random-access memory (RAM)), or any other medium which can be used to carry or store desired program code in the form of machine-executable instructions or data structures and which can be accessed by a computer or other machine with processing circuitry **602.** A basic input/output system (BIOS) **612** may be stored in the non-volatile memory **606** and can include the basic routines that help to transfer information between elements within the computer system **600.**

The computer system **600** may further include or be coupled to a non-transitory computer-readable storage medium such as the storage device **614,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **614** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **614** and/or in the volatile memory **610,** which may include an operating system **616** and/or one or more program modules **616.** All or a portion of the examples disclosed herein may be implemented as a computer program **620** stored on a transitory or non-transitory computer-usable or computer-readable storage medium (e.g., single medium or multiple media), such as the storage device **614,** which includes complex programming instructions (e.g., complex computer-readable program code) to cause the processing circuitry **602** to carry out actions described herein. Thus, the computer-readable program code of the computer program **620** can comprise software instructions for implementing the functionality of the examples described herein when executed by the processing circuitry **602.** In some examples, the storage device **614** may be a computer program product (e.g., readable storage medium) storing the computer program **620** thereon, where at least a portion of a computer program **620** may be loadable (e.g., into a processor) for implementing the functionality of the examples described herein when executed by the processing circuitry **602.** The processing circuitry **602** may serve as a controller or control system for the computer system **600** that is to implement the functionality described herein.

The computer system **600** may include an input device interface **622** configured to receive input and selections to be communicated to the computer system **600** when executing instructions, such as from a keyboard, mouse, touch-sensitive surface, etc. Such input devices may be connected to the processing circuitry **602** through the input device
interface **622** coupled to the system bus **606** but can be connected through other interfaces, such as a parallel port, an Institute of Electrical and Electronic Engineers (IEEE) 1394 serial port, a Universal Serial Bus (USB) port, an IR interface, and the like. The computer system **600** may include an output device interface **624** configured to forward output, such as to a display, a video display unit (e.g., a liquid crystal display (LCD) or a cathode ray tube (CRT)). The computer system **600** may include a communications interface **626** suitable for communicating with a network as appropriate or desired.

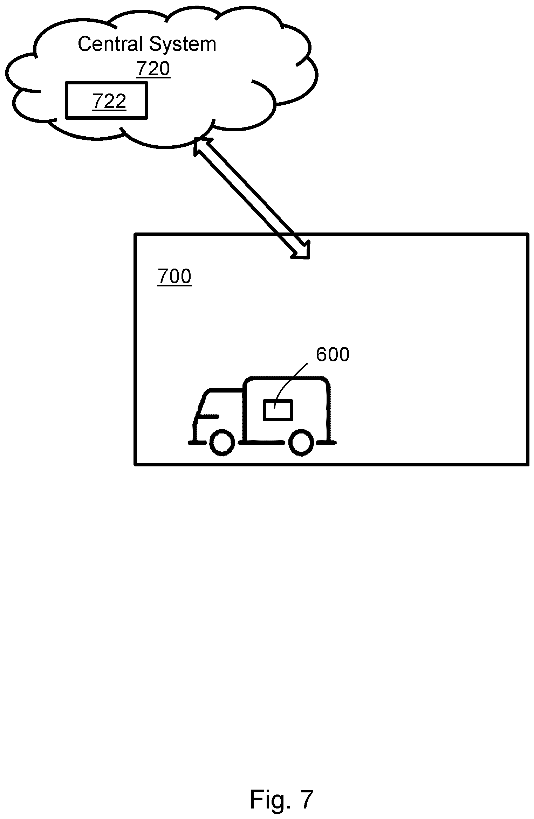

The computer system 600 comprised in a product may communicate with a central system in a network for e.g. sending or receiving data. **FIG. 7** shows an exemplary network comprising a central system 720 and one or more products 700, wherein the product is represented by a vehicle comprising a computer system 600. However, the product 700 may be any one of a vehicle, a construction equipment machine, a household appliance, an everyday mechatronic apparatus, a medical mechatronic apparatus, an industrial mechatronic apparatus, a charging station, a naval mechatronic apparatus, an air mechatronic apparatus, a military mechatronic apparatus etc.

The central system 720 comprises a processing circuitry **722** configured to process data from a number of products. The central system 720 is configured to perform any one of the actions 510-540 described above.

For example, the central system 720 is configured to receive a number of groups of quality indicating data from the number of products. Each group of quality indicating data comprises a collection of quality indicating data for a session representing how a product is operating during a period. Each quality indicating data is generated from an operating quality indicating value of a component comprised in the product by normalizing the operating quality indicating value to an integer indicating how close the operating quality indicating value is to a required quality threshold or how much the operating quality indicating value is above the required quality threshold.

The central system 720 is configured to process the groups of quality indicating data.

The central system 720 is configured to assess functional robustness of the component comprised in the product based on the groups of quality indicating data.

The central system 720 may be configured to send the assessed functional robustness of the component to one or more data consumers, e.g. function developers of the product for improving operating quality of the product.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Some examples are listed here.
**Example 1:** A method for generating and storing quality indicating data for a product, the method comprising:
   collecting (410) operating quality indicating values from at least one component comprised in the product;
   generating (420) a quality indicating data for each of the operating quality indicating values by normalizing each of the operating quality indicating values to an integer, wherein the quality indicating data indicating how close an operating quality indicating value is to a required quality threshold or how much the operating quality indicating value is above the required quality threshold; and
   storing (430) the quality indicating data together with other operational data of the component collected for a session representing how the product is operating during a period.
**Example 2:** The method according to Example 1, wherein normalizing each of the operating quality indicating values comprises comparing each of the operating quality indicating values with a physical threshold value, wherein the physical threshold value represents the required quality threshold which is configurable or changeable depends on different applications and functions.
**Example 3:** The method according to Example 2, wherein each of the operating quality indicating values is normalized to an integer represented by 1 Byte with distinct integer values of 0-255, and wherein integer value 128 represents the required quality threshold.
**Example 4:** The method according to Example 3, wherein the integer values of 0-255 indicate functional robustness of the at least one component, and wherein the quality indicating data in the range of 0-127 indicates the functional robustness of the at least one component is normal or robust, as well as a degree of robustness, and the quality indicating data in the range of 128-254 indicates the functional robustness of the at least one component is unnormal or unrobust, as well as a degree of unrobustness, and the value 255 indicates "not yet evaluated".
**Example 5:** The method according to any one of Examples 1-4, wherein each quality indicating data is identified by an index in a Data Identifier, DID.
**Example 6:** The method according to Example 5, wherein the DID is defined as per functional area of the product.
**Example 7:** The method according to any one of Examples 1-6, wherein the method further comprises grouping (440) together a collection of quality indicating data at an end of the session using a session identifier.
**Example 8:** The method according to any one of Examples 1-7, wherein the method further comprises sending (450) the quality indicating data or a group of quality indicating data to a central system for further processing.
**Example 9:** The method according to any one of Examples 1-8, wherein the method further comprises controlling or diagnosing (460) the operation of the product based on the quality indicating data.
**Example 10:** The method according to any one of Examples 1-9, wherein the operating quality indicating values are any one or a combination of sensor values, simulated values, estimated values, software model values, controlling signal values of the product, and the operating quality indicating values are measured, or tested, or simulated, or evaluated for checking or indicating functional robustness of any hardware components or software components at any level from a system to a smallest software and hardware component level comprised in the product.
**Example 11:** A computer system (600 comprising processing circuitry (602) configured to perform the method according to any one of Examples 1-10.
**Example 12:** A product (700) comprising the computer system (600) of Example 11.
**Example 13:** The product according to Example 12, wherein the product (700) is any one of a vehicle, a construction equipment machine, a household appliance, an everyday mechatronic apparatus, a medical mechatronic apparatus, an industrial mechatronic apparatus, a charging station, a naval mechatronic apparatus, an air mechatronic apparatus, a military mechatronic apparatus.
**Example 14:** A computer program product comprising program code (620) for performing, when executed by the processing circuitry (602), the method of any one of Examples 1-10.
**Example 15:** A non-transitory computer-readable storage medium (614) comprising instructions, which when executed by the processing circuitry (602), cause the processing circuitry to perform the method of any one of Examples 1-10.
**Example 16:** A method performed by a central system (720) for processing data from a number of products, the method comprising:
   receiving (510) a number of groups of quality indicating data from the number of products, wherein each group of quality indicating data comprises a collection of quality indicating data for a session representing how a product is operating during a period, and wherein each quality indicating data is generated from an operating quality indicating value of a component comprised in the product by normalizing the operating quality indicating value to an integer indicating how close the operating quality indicating value is to a required quality threshold or how much the operating quality indicating value is above the required quality threshold;
   processing (520) the groups of quality indicating data; and assessing (530) functional robustness of the component comprised in the product based on the groups of quality indicating data.
**Example 17:** The method according to Example 16, wherein processing the groups of quality indicating data comprises calculating at least one of a standard deviation of the groups of quality indicating data, an average of the groups of quality indicating data, and a histogram of the groups of quality indicating data.
**Example 18:** The method according to any one of Examples 16-17, wherein assessing the functional robustness of the component comprised in the product comprises assessing the functional robustness of the component comprised in the product to at least one of normal, no fault, small fault, big fault, and a fault value based on one or more function thresholds.
**Example 19:** The method according to Example 18, wherein the one or more function thresholds comprises a control function threshold, and / or a diagnostic function threshold.
**Example 20:** The method according to any one of Examples 16-19, wherein the number of products are selected based on at least one of Electronic Control Unit, ECU, version, software version, market, and manufacturing date of the products.
**Example 21:** The method according to any one of Examples 16-20, further comprising sending (540) the assessed functional robustness of the component to one or more data consumers for improving operating quality of the product.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A method for generating and storing quality indicating data for a product, the method comprising:
collecting (410) operating quality indicating values from at least one component comprised in the product;
generating (420) a quality indicating data for each of the operating quality indicating values by normalizing each of the operating quality indicating values to an integer, wherein the quality indicating data indicating how close an operating quality indicating value is to a required quality threshold or how much the operating quality indicating value is above the required quality threshold; and
storing (430) the quality indicating data together with other operational data of the component collected for a session representing how the product is operating during a period.

2. The method according to claim 1, wherein normalizing each of the operating quality indicating values comprises comparing each of the operating quality indicating values with a physical threshold value, wherein the physical threshold value represents the required quality threshold which is configurable or changeable depends on different applications and functions.

3. The method according to claim 2, wherein each of the operating quality indicating values is normalized to an integer represented by 1 Byte with distinct integer values of 0-255, and wherein integer value 128 represents the required quality threshold, and wherein the quality indicating data in the range of 0-127 indicates the functional robustness of the at least one component is normal or robust, as well as a degree of robustness, and the quality indicating data in the range of 128-254 indicates the functional robustness of the at least one component is unnormal or unrobust, as well as a degree of unrobustness, and the value 255 indicates "not yet evaluated".

4. The method according to any one of claims 1-3, wherein each quality indicating data is identified by an index in a Data Identifier, DID, and wherein the DID is defined as per functional area of the product.

5. The method according to any one of claims 1-4, wherein the method further comprises grouping (440) together a collection of quality indicating data at an end of the session using a session identifier.

6. The method according to any one of claims 1-5, wherein the method further comprises sending (450) the quality indicating data or a group of quality indicating data to a central system for further processing.

7. The method according to any one of claims 1-6, wherein the method further comprises controlling or diagnosing (460) the operation of the product based on the quality indicating data.

8. The method according to any one of claims 1-7, wherein the operating quality indicating values are any one or a combination of sensor values, simulated values, estimated values, software model values, controlling signal values of the product, and the operating quality indicating values are measured, or tested, or simulated, or evaluated for checking or indicating functional robustness of any hardware components or software components at any level from a system to a smallest software and hardware component level comprised in the product.

9. A computer system (600 comprising processing circuitry (602) configured to perform the method according to any one of claims 1-8.

10. A product (700) comprising the computer system (600) of claim 9.

11. The product according to claim 10, wherein the product (700) is any one of a vehicle, a construction equipment machine, a household appliance, an everyday mechatronic apparatus, a medical mechatronic apparatus, an industrial mechatronic apparatus, a charging station, a naval mechatronic apparatus, an air mechatronic apparatus, a military mechatronic apparatus.

12. A method performed by a central system (720) for processing data from a number of products, the method comprising:
receiving (510) a number of groups of quality indicating data from the number of products, wherein each group of quality indicating data comprises a collection of quality indicating data for a session representing how a product is operating during a period, and wherein each quality indicating data is generated from an operating quality indicating value of a component comprised in the product by normalizing the operating quality indicating value to an integer indicating how close the operating quality indicating value is to a required quality threshold or how much the operating quality indicating value is above the required quality threshold;
processing (520) the groups of quality indicating data; and
assessing (530) functional robustness of the component comprised in the product based on the groups of quality indicating data.

13. The method according to claim 12, wherein processing the groups of quality indicating data comprises calculating at least one of a standard deviation of the groups of quality indicating data, an average of the groups of quality indicating data, and a histogram of the groups of quality indicating data.

14. The method according to any one of claims 12-13, wherein assessing the functional robustness of the component comprised in the product comprises assessing the functional robustness of the component comprised in the product to at least one of normal, no fault, small fault, big fault, and a fault value based on one or more function thresholds.

15. The method according to any one of claims 12-14, further comprising sending (540) the assessed functional robustness of the component to one or more data consumers for improving operating quality of the product.
